# EUROPEAN PATENT SPECIFICATION

(11) **EP 3 527 864 B1**
(45) Date of publication and mention of the grant of the patent: **31.05.2023**
(21) Application number: 19155062.3
(22) Date of filing: 01.02.2019
(51) Int. Cl.: F16K 27/00, B33Y 80/00, B33Y 10/00

(54) **METHODS OF MANUFACTURING A VALVE OR AN ELEMENT USED TO FORM A VALVE**
VERFAHREN ZUR HERSTELLUNG EINES VENTILS ODER EINES ELEMENTS ZUR HERSTELLUNG EINES VENTILS
PROCÉDÉS DE FABRICATION D'UNE SOUPAPE OU UN ÉLÉMENT UTILISÉ POUR FORMER UNE SOUPAPE

(30) Priority: 14.02.2018 GB 201802405
(43) Date of publication of application: 21.08.2019
(60) Divisional application: 23158030.9
(73) Proprietor: Rolls-Royce plc, London N1 9FX (GB)
(72) Inventor: Poole, David, Derby, Derbyshire DE24 8BJ (GB)
(74) Representative: Rolls-Royce plc

(56) References cited:
- EP-A1- 2 851 146
- EP-A1- 2 851 146
- WO-A1-2017/066215
- WO-A1-2017/066215
- WO-A1-2017/220058
- DE-A1-102015 224 756
- DE-A1-102015 224 756

## Description

The present disclosure relates to methods of manufacturing a valve, or an element used to form a valve, using additive manufacturing. Such a method is known from WO 2017/066215.

Additive manufacturing processes, in which components may be created by the selective addition of material, in contrast to the traditional formative or subtractive methods, may be desirable for a variety of reasons. However, components formed from additive manufacturing may not be sufficiently hard for some uses or it may desirable for only a part of a component to be formed from a hard material. It has previously been known to form a component using additive manufacturing and then to form one or more hardwearing surfaces on the component. For example, a hardwearing surface may be deposited using a welding process such as a Plasma Transferred Arc (PTA) process. This may be difficult, especially if access to the surface on which the hardwearing surface is to be formed is limited and may require costly bespoke automated processes and equipment. WO 2017/066215 relates to a method of manufacturing a body structure of a control valve. The method includes additive manufacturing the inner wall and the lattice structure together by depositing a solidifiable material in a predetermined pattern to create a three-dimensional integrated body.

DE102015224756 relates to a method for the production of a valve arrangement, in particular a hydraulic valve arrangement, which comprises at least one valve housing and at least one electronic component with an electronic component base, wherein the procedure has at least the following steps: a) layer-wise building of the valve housing on an underground, b) building up the electronic component base in a layered manner, wherein the electronic component base is connected to the valve housing.

According to a first aspect there is provided a method as claimed in claim 1.

The first part may comprise a hardfacing alloy.

The step of adding the second component to the first part may include placing the first part of the second component in contact with the first part of the first component.

The step of forming the second part of the first component may comprise forming a third component on top of the first part of the second component. The third component may comprise a lattice structure or semi-melted material.

The second component may be secured to the first component by the process of forming the second part of the first component.

The second component may be encapsulated within the first component after formation of the second part of the first component.

The first and second components may be formed from different materials.

The first and second parts of the first component may be formed using the same type of additive manufacturing process.

The first part of the first component may include a recess; and adding the second component to the first part of the first component includes inserting at least a part of the second component into the recess.

The method may further comprise heat treating the valve.

The second component may be harder than the first component.

The first and/or second part of the first component may be formed from at least one of a laser/electron beam melting/sintering process, a powder bed fusion process, a 3D printing process, a selective laser sintering/melting process, a blown powder process, a direct laser deposition process, a freeform manufacturing process, an additive layer manufacturing process, a wire feed process and a direct energy deposition process.

The second component may be formed by at least one of a casting process, a forging process, a rolling process, a drawing process, a machining process, a Hot Isostatically Pressing (HIP) process, and an additive manufacturing process.

The first part of the first component may be formed on a baseplate; and the method further comprises detaching the first part of the first component from the baseplate.

The method may further comprise machining at least one surface of at least one of the first and second components.

A plurality of second components may be added to the first part of the first component. The method may further comprise: adding a further second component to the second part of the first component; and forming a third part of the first component using additive manufacturing.

According to a second aspect there is provided a valve or an element used to form a valve manufactured by a method as described in any of the preceding paragraphs.

According to a third aspect there is provided a method of manufacturing an object comprising forming a first part of a first component using additive manufacturing. A second component may be added to the first part of the first component. A second part of the first component may be formed using additive manufacturing.

The second component comprises:
a first part comprising a first material; and a second part comprising a second material. The first material of the first part has a greater hardness than the second material of the second part. The first part may comprise a hardfacing alloy.

The second part of the second component comprises a lattice structure.

The step of adding the second component to the first part may include placing the first part of the second component in contact with the first part of the first component.

The step of forming the second part of the first component may comprise forming a third component on top of the first part of the second component. The third component may comprise a lattice structure or semi-melted material.

In an arrangement, the second component may be secured to the first component by the process of forming the second part of the first component. The second component may be encapsulated within the first component after the formation of the second part of the first component.

In an arrangement, the first and second components may be formed from different materials. Alternatively, the first and second components may be formed from the same material.

In an arrangement, the first and second parts of the first component may be formed using the same type of additive manufacturing process. In such an arrangement, the additive manufacturing process may be paused between the formation of the first and second parts of the first component for the second component to be added to the first part of the first component.

The first part of the first component may be formed to include a recess. Adding the second component to the first part of the first component may include inserting at least part of the second component into the recess.

In an arrangement, the method of manufacturing an object may further comprise heat treating the object.

In an arrangement, the second component may be harder than the first components.

In an arrangement, at least one of the first and second parts of the first component is formed from at least one of a laser/electron beam melting/sintering process, a powder bed fusion process, a 3D printing process, a selective laser sintering/melting process, a blown powder process, a direct laser deposition process, a freeform manufacturing process, an additive layer manufacturing process, a wire feed process and a direct energy deposition process.

In an arrangement, the second component is formed by at least one of a casting process, a forging process, a rolling process, a drawing process, a machining process, a Hot Isostatically Pressing (HIP) process and an additive manufacturing process.

In an arrangement, the first part of the first component may be formed on a baseplate. The method of manufacturing an object may further include detaching the first part of the first component from the baseplate.

In an arrangement, the method of manufacturing an object may further comprise machining at least one surface of at least one of the first and second components.

According to a fourth aspect there is provided an object manufactured according to any of the arrangements discussed above. In an arrangement, the object may be a valve or an element used to form a valve.

The disclosure will now be further described by way of non-limiting examples, with reference to the accompanying figures, in which:
Figure 1 depicts a flow diagram of possible steps used to manufacture a valve or an element used to form a valve; and
Figures 2 to 7 depict a valve or an element used to form a valve at respective stages during the process of manufacturing the valve or element.

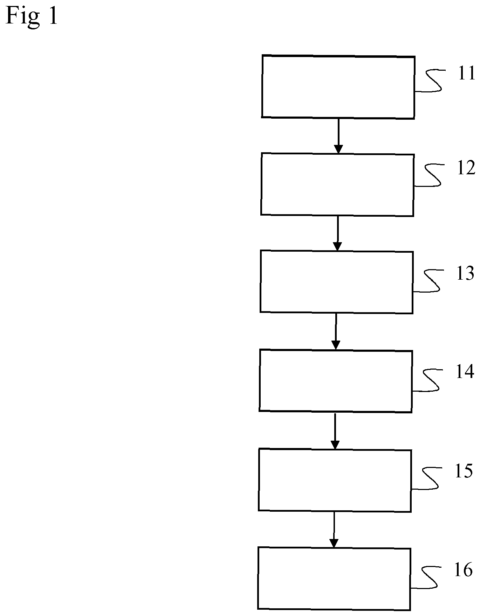

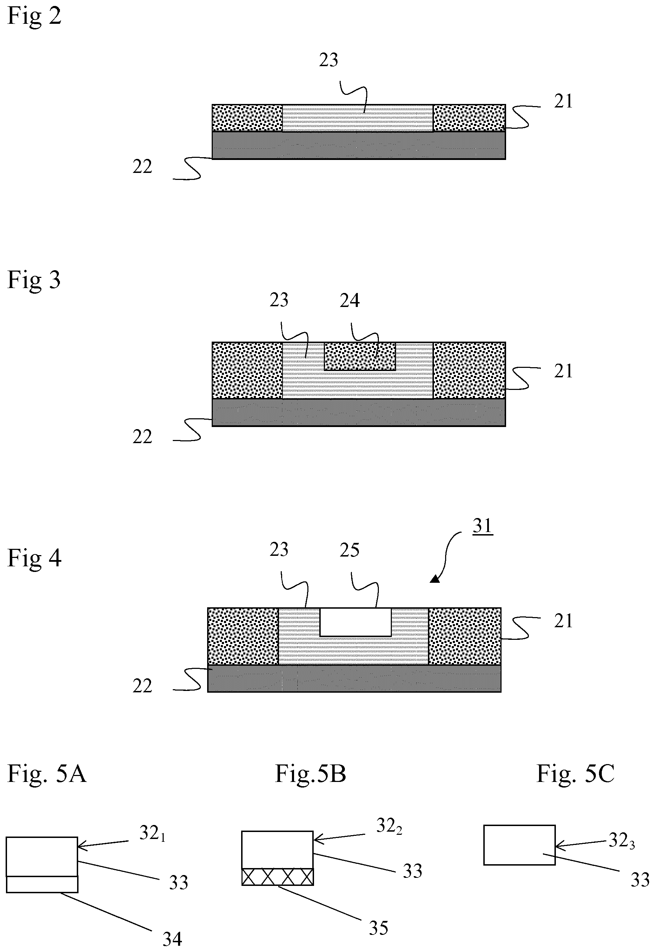

Figure 1 schematically depicts steps taken in the manufacture of a valve, or an element used to form a valve. It will be appreciated that in many cases, the order of the steps may be altered without significantly affecting the process. Figures 2 to 7 schematically depict a valve, or an element used to form a valve, being formed by an example of such a process at successive stages during the process.

In a first step 11, a first part 23 of a first component 31 may be formed using additive manufacturing, in which the part 23 is created by selective addition of material.

Any of a variety of additive manufacturing processes may be used including one or more of a laser/electron beam melting/sintering process, a powder bed fusion process, a 3D printing process, a selective laser sintering/melting process, a blown powder process, a direct laser deposition process, a freeform manufacturing process, an additive layer manufacturing process, a wire feed process and a direct energy deposition process.

The first part 23 of the first component 31 may comprise any suitable material for a valve, or an element of a valve. For example, the first part 23 may comprise a stainless steel (such as 316, 316L, 316LN, 304, 304L, 304LE, Duplex), a low alloy steel, or a nickel based alloy (such as Monel, Inconel 625, Inconel 600, Inconel 690, Inconel 718, C263).

It will be appreciated that the preceding list is not a list of mutually exclusive processes. Instead, one or more items within the list may be a subset of another or may overlap with another general process description.

In the example shown in Figures 2 to 7, the additive manufacturing process involves providing unfused material 21 onto a baseplate 22 and selectively fusing the material in layers in order to form a component.

Processes of additive manufacturing may enable formation of complex shapes, including shapes that are not possible or difficult to produce using alternative manufacturing processes, such as casting, forging, rolling or drawing or subtractive methods such as manufacturing methods based on machining surfaces of a section of a material to provide the desired final shape.

As depicted in Figure 3 and 4, by selection of the regions in which material is added to the first part 23 of the first component 31, a desired shape may be provided. In the example shown in Figure 4, the shape of the first part 23 of the first component 31 may include a recess 25, from which residual unfused material 24 may be removed.

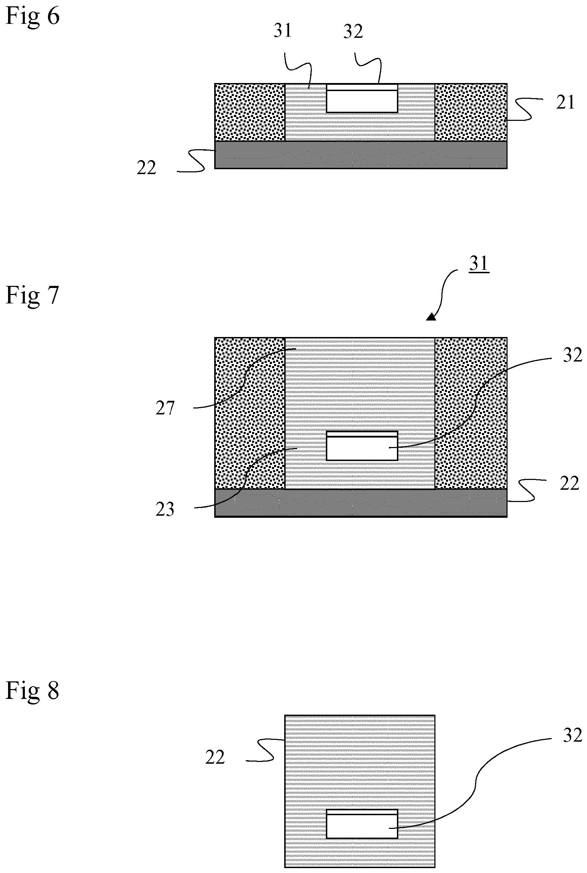

In a step 12, a second component 32 may be added to the first component 31. For example, a second component 32₁ as illustrated in Fig. 5A may be added to the first component 31, or a second component 32₂ as illustrated in Fig. 5B may be added to the first component 31, or a second component 32₃ as illustrated in Fig. 5C may be added to the first component 31. As shown in Figure 6, in an arrangement, the recess 25 formed in the first part 23 of the first component 31 may be configured such that at least a part of the second component 32 can be inserted into the recess 25. The fitting of at least a part of the second component 32 into the recess 25 within the first part 23 of the first component 31 may at least temporarily secure the position of the second component 32 relative to the first part 23 of the first component 31 during the manufacturing process.

In an arrangement, the second component 32 may include a protrusion having a shape that corresponds to the shape of the recess 25 formed in the first part 23 and first component 31.

It should be appreciated, however, that the formation of a recess 25 in which to receive at least a part of the second component 32 is not essential. In an alternative arrangement, the second component 32 maybe at least temporarily secured to the first part 23 of the first component 31 by an adhesive and/or by another bonding process, such as welding. It will also be appreciated that the second component 32 may not need to be secured to the first part 23 of the second component 31 for subsequent processing steps. Accordingly, the second component 32 may simply be placed on top of the first part 23 of the first component 31.

The second component 32 may take any of a variety of forms. It may be formed from the same material as the first component and/or be formed by the same process. Alternatively, it may be formed from a different material from the first component, which may be enabled by forming it by a different process. In particular, the second component 32 need not be formed using additive manufacturing but may be formed by an alternative process such as a casting process, a forging process, a rolling process, a drawing process, a machining process and/or a Hot Isostatically Pressing (HIP) process.

The ability to use manufacturing processes other than additive manufacturing in order to form the second component 32 may enable the component to have different properties from those which are available from additive manufacturing processes. Alternatively or additionally, the second component 32 may be heat treated before it is added to the first part 23 of the first component 31, again providing the opportunity to ensure that the second component 32 has different properties from the first component 31. In an arrangement, the second component 32 may be harder than the first component 31.

The second component 32₁ illustrated in Fig. 5A comprises a first part 33 and a second part 34. The first part 33 has a greater hardness than the second part 34. The first part 33 may comprise a hardfacing alloy such as Tristelle, Stellite, Talonite, or NOREM. The second part 34 may provide a baseplate for the first part 33 and may comprise the same material as, or a similar material to, the first part 23 of the first component 31. For example, the second part 34 may comprise a stainless steel (such as 316, 316L, 316LN, 304, 304L, 304LE, Duplex), a low alloy steel, or a nickel based alloy (such as Monel, Inconel 625, Inconel 600, Inconel 690, Inconel 718, C263).

The second component 32₂ illustrated in Fig, 5B comprises a first part 33 and a second part 35. Similar to the second component 32₁, the first part 33 has a greater hardness than the second part 35. The first part 33 may comprise a hardfacing alloy such as Tristelle, Stellite, Talonite, or NOREM. The second component 32₂ differs from the first component 32₁ in that the second part 35 has a lattice structure or comprises semi-melted material. The second part 35 may comprise the same material as, or a similar material to, the first part 23 of the first component 31. For example, the second part 35 may comprise a stainless steel (such as 316, 316L, 316LN, 304, 304L, 304LE, Duplex), a low alloy steel, or a nickel based alloy (such as Monel, Inconel 625, Inconel 600, Inconel 690, Inconel 718, C263).

The second component 32₃ illustrated in Fig. 5C comprises only a first part 33 that includes a hardfacing alloy such as Tristelle, Stellite, Talonite, or NOREM.

Where the second component 32₁ or 32₂ is added to the first component 31, step 12 includes placing the first part 33 of the second component 32₁ or 32₂ in contact with the first part 23 of the first component 31. In other words, the second component 32₁, 32₂ is positioned so that the first part 33 faces the first part 23 of the first component 31 (down in Fig. 6), and so that the second part 34, 35 faces away from the first part 23 of the first component 31 (up in Fig. 6) and towards the energy source of the additive manufacturing device.

It should be appreciated, therefore, that the presently disclosed process for forming an valve or valve element may provide one or more of the benefits of additive manufacturing for the overall form of the valve or valve element but have the benefit of the material properties available for at least one component that are possible when using manufacturing processes other than additive manufacturing.

In a further step 13, as shown in Figure 7, a second part 27 of the first component 31 may be formed using additive manufacturing. The second part 27 of the first component 31 may be formed by the same additive manufacturing process as the first part 23 of the first component 31.

However, this is not essential and an alternative additive manufacturing process may be used for the formation of the second part 27.

The formation of the second part 27 of the first component 31 may secure the position of the second component 32 relative to the first component 31. In an arrangement, this may be effected by the second part 27 of the first component 31 at least partially surrounding the second component 32. The second part 27 of the first component 31 may adhere to at least one surface of the second component 32. Alternatively or additionally, the shape of the second part 27 of the first component 31 formed around the second component 32 may physically restrain movement of the second component 32 relative to the first component 31.

In an arrangement, as schematically depicted in Figure 7, the second component 32 may be encapsulated within the two parts 23, 27 of the first component 31.

Where the second component 32₃ is added to the first part 23 of the first component 31, step 13 may include providing a third component on top of the second component 32₃ using (for example) an additive manufacturing process. The third component may comprise the same material as the second part 27 of the first component 31 and may comprise a lattice structure or may be semi-melted. Consequently, the first part 33 of the second component 32₃ has a greater hardness than the third component.

The use of the second component 32₁, 32₂ may be advantageous in that the second part 34, 35 may be positioned between the energy source of the additive manufacturing device and the first part 33 of the second component 32₁, 32₂ (as illustrated in Fig. 6) during step 13 and absorb at least some of the energy emitted by the energy source of the additive manufacturing device. The second part 34, 35 may thus reduce the energy received by the first part 33 during step 13 and may reduce the likelihood of the first part 33 cracking/breaking/failing.

Similarly, where the second component 32₃ is added to the first component 31, the third component formed in step 13 above the first part 33 of the second component 32₃ may advantageously reduce the energy received by the first part 33 of the second component 32₃ while the second part 27 of the first component 31 is being built.

As depicted in Figure 8, after completion of the additive manufacturing process, remaining unfused material 21 may be removed. Alternatively or additionally, if the additive manufacturing process involved formation of the first component 31 on a baseplate 22, as shown in Figures 2 to 7, in a step 14, the baseplate 22 may be separated from the valve or valve element, namely detached from the first component 31.

In an arrangement, the method of manufacturing the valve may also include a heat treatment step 15. It should be appreciated that the heat treatment process used will depend upon the materials used to form the valve and the property desired. It should be appreciated that the stage in the process at which the heat treatment step is applied may also vary.

For example, as discussed above, the second component 32 may be subjected to a heat treatment before being added to the first component 31. Alternatively or additionally, the first part 23 of the first component 31 may be heat treated before the addition of the second component 32. Alternatively or additionally, an assembly formed of the first part 23 of the first component 31 and the second component 32 may be heat treated. Alternatively or additionally, the valve or valve element may be heat treated after completion of the formation of the first component 31 with the second component 32 secured to it.

Where the second component 32₂ or 32₃ is added, the method may include a step of hot isostatically pressing the assembly of the first component 31 and the second component 32₂ or 32₃ to remove any porosity introduced by the lattice structure.

In an arrangement, the method of manufacturing the valve may also include a step 16 of machining at least one surface of at least one of the first and second components 31, 32. For example, as shown in Figure 1, such a step may occur after formation of the first component 31 including the second component 32. However, it should be appreciated that a machining step may alternatively or additionally be included earlier in the process.

It should be appreciated that, although the above described process only relates to the inclusion of a single second component within a first component 31, by adding the second component 32 between the formation of first and second parts 23, 27 of the first component 31 by additive manufacturing, a valve may be manufactured having a plurality of second components 32 incorporated in a similar manner. A plurality of the second components, which may differ from each other, may be added to the part-formed first component 31 at the same time. Alternatively or additionally, the formation of the first part 31 by additive manufacturing may be paused more than once for the addition of second components 32 at different times.

The method may also include a step of adding any remaining components of the valve to the assembly of the first and second components 31, 32.

It will be appreciated that the above described method of manufacturing a valve or valve element may be used in order to manufacture a variety of objects.

## Claims

1. A method of manufacturing a valve or an element used to form a valve, the method comprising:
forming a first part (23) of a first component (31) using additive manufacturing;
adding a second component (32, 32₁, 32₂, 32₃) to the first part (23) of the first component (31); and forming a second part (27) of the first component (31) using additive manufacturing, **characterised in that** the second component (32 1, 322 ) comprises a first part (33) comprising a first material and a second part (34, 35) comprising a second material, the first material of the first part (33) having a greater hardness than the second material of the second part (34, 35), the second part of the second component (321, 322) has a lattice structure.

2. A method as claimed in claim 1, wherein the first part (33) of the second component (32₁, 32₂) comprises a hardfacing alloy.

3. A method as claimed in claim 1 or 2, wherein the step of adding the second component (32₁, 32₂) to the first part (23) includes placing the first part (33) of the second component (32₁, 32₂) in contact with the first part (23) of the first component (31).

4. A method as claimed in any of the preceding claims, wherein the step of forming the second part (27) of the first component (31) comprises forming a third component on top of the first part (33) of the second component (32₃), the third component comprising a lattice structure or semi-melted material.

5. A method as claimed in any of the preceding claims, wherein the second component (32) is secured to the first component (31) by the process of forming the second part (27) of the first component.

6. A method as claimed in any of the preceding claims, wherein the second component (32) is encapsulated within the first component (31) after formation of the second part (27) of the first component (31).

7. A method as claimed in any of the preceding claims, wherein the first part (23) of the first component (31) includes a recess (25); and adding the second component (32) to the first part (23) of the first component (31) includes inserting at least a part of the second component into the recess.

8. A method as claimed in any of the preceding claims, wherein the second component (32) is harder than the first component (31).

9. A method as claimed in any of the preceding claims, wherein the first and/or second part (23, 27) of the first component (31) is formed from at least one of a laser/electron beam melting/sintering process, a powder bed fusion process, a 3D printing process, a selective laser sintering/melting process, a blown powder process, a direct laser deposition process, a freeform manufacturing process, an additive layer manufacturing process, a wire feed process and a direct energy deposition process.

10. A method as claimed in any of the preceding claims, wherein the second component (32) is formed by at least one of a casting process, a forging process, a rolling process, a drawing process, a machining process, a Hot Isostatically Pressing (HIP) process, and an additive manufacturing process.

11. A method as claimed in any of the preceding claims, wherein the first part (23) of the first component (31) is formed on a baseplate (22); and
the method further comprises detaching the first part (23) of the first component (31) from the baseplate (22).

12. A method as claimed in any of the preceding claims, further comprising machining at least one surface of at least one of the first and second components (31, 32).

13. A method as claimed in any of the preceding claims, wherein a plurality of second components (32) are added to the first part (23) of the first component (31).

14. A method as claimed in any of the preceding claims, further comprising:
adding a further second component (32) to the second part (27) of the first component (31); and
forming a third part of the first component using additive manufacturing.

## Patentansprüche

1. Methode zur Fertigung eines Ventils oder eines Elements, das zum Bilden eines Ventils verwendet wird, die Methode umfassend:
Bilden eines ersten Teils (23) einer ersten Komponente (31) durch additive Fertigung;
Hinzufügen einer zweiten Komponente (32, 32₁, 32₂, 32₃) zu dem ersten Teil (23) der ersten Komponente (31); und Bilden eines zweiten Teils (27) der ersten Komponente (31) unter Verwendung einer additiven Fertigung, **dadurch gekennzeichnet, dass** die zweite Komponente (32 1, 322) ein erstes Teil (33) umfassend ein erstes Material, und ein zweites Teil (34, 35) umfassend ein zweites Material, umfasst, wobei das erste Material des ersten Teils (33) eine größere Härte aufweist als das zweite Material des zweiten Teils (34, 35), wobei das zweite Teil der zweiten Komponente (321, 322) eine Gitterstruktur aufweist.

2. Methode nach Anspruch 1, wobei der erste Teil (33) der zweiten Komponente (32₁, 32₂) eine Aufpanzerungslegierung umfasst.

3. Methode nach Anspruch 1 oder 2, wobei der Schritt eines Hinzufügens der zweiten Komponente (32₁, 32₂) zu dem ersten Teil (23) ein Platzieren des ersten Teils (33) der zweiten Komponente (32₁, 32₂) in Kontakt mit dem ersten Teil (23) der ersten Komponente (31) beinhaltet.

4. Methode nach einem der vorherigen Ansprüche, wobei der Schritt eines Bildens des zweiten Teils (27) der ersten Komponente (31) ein Bilden einer dritten Komponente auf dem ersten Teil (33) der zweiten Komponente (32₃) umfasst, die dritte Komponente umfassend eine Gitterstruktur oder ein halbgeschmolzenes Material.

5. Methode nach einem der vorherigen Ansprüche, wobei die zweite Komponente (32) durch den Verfahren eines Bildens des zweiten Teils (27) der ersten Komponente an der ersten Komponente (31) befestigt wird.

6. Methode nach einem der vorherigen Ansprüche, wobei die zweite Komponente (32) nach Bilden des zweiten Teils (27) der ersten Komponente (31) in der ersten Komponente (31) eingekapselt wird.

7. Methode nach einem der vorherigen Ansprüche, wobei das erste Teil (23) der ersten Komponente (31) eine Aussparung (25) beinhaltet; und ein Hinzufügen der zweiten Komponente (32) zu dem ersten Teil (23) der ersten Komponente (31) ein Einsetzen mindestens eines Teils der zweiten Komponente in die Aussparung beinhaltet.

8. Methode nach einem der vorherigen Ansprüche, wobei die zweite Komponente (32) härter ist als die erste Komponente (31).

9. Methode nach einem der vorherigen Ansprüche, wobei das erste und/oder zweite Teil (23, 27) der ersten Komponente (31) durch mindestens eines von einem Laser-/Elektronenstrahl-Schmelz-/Sinterverfahren, einem Pulverbettschmelzverfahren, einem 3D-Druckverfahren, einem selektiven Lasersinter-/Schmelzverfahren, einem Blaspulververfahren, einem direkten Laserdepositionsverfahren, einem Freiform-Fertigungsverfahren, einem additiven Schichtfertigungsverfahren, einem Drahtvorschubverfahren und einem direkten Energiedepositionsverfahren.

10. Methode nach einem der vorherigen Ansprüche, wobei die zweite Komponente (32) durch mindestens eines von einem Gießverfahren, einem Schmiedeverfahren, einem Walzverfahren, einem Ziehverfahren, einem Bearbeitungsverfahren, einem Verfahren eines Heiß-Isostatisches-Pressens (HIP) und einem additiven Fertigungsverfahren gebildet wird.

11. Methode nach einem der vorherigen Ansprüche, wobei das erste Teil (23) der ersten Komponente (31) auf einer Grundplatte (22) gebildet ist; und
wobei die Methode ferner ein Lösen des ersten Teils (23) der ersten Komponente (31) von der Grundplatte (22) umfasst.

12. Methode nach einem der vorherigen Ansprüche, ferner umfassend ein Bearbeiten mindestens einer Oberfläche von mindestens einer von der ersten und der zweiten Komponente (31, 32).

13. Methode nach einem der vorherigen Ansprüche, wobei eine Vielzahl von zweiten Komponenten (32) zu dem ersten Teil (23) der ersten Komponente (31) hinzugefügt wird.

14. Methode nach einem der vorherigen Ansprüche, ferner umfassend:
Hinzufügen einer weiteren zweiten Komponente (32) zu dem zweiten Teil (27) der ersten Komponente (31); und
Bilden eines dritten Teils der ersten Komponente unter Verwendung von additiver Fertigung.

## Revendications

1. Procédé de fabrication d'une soupape ou d'un élément utilisé pour former une soupape, le procédé comprenant :
la formation d'une première partie (23) d'un premier composant (31) à l'aide de la fabrication additive ;
l'ajout d'un deuxième composant (32, 32₁, 32₂, 32₃) à la première partie (23) du premier composant (31) ; et la formation d'une deuxième partie (27) du premier composant (31) à l'aide de la fabrication additive, **caractérisé en ce que** le deuxième composant (32 1, 322) comprend une première partie (33) comprenant un premier matériau et une deuxième partie (34, 35) comprenant un second matériau, le premier matériau de la première partie (33) comportant une dureté supérieure au second matériau de la deuxième partie (34, 35), la deuxième partie du deuxième composant (321, 322) comportant une structure en treillis.

2. Procédé selon la revendication 1, ladite première partie (33) du deuxième composant (32₁, 32₂) comprenant un alliage de rechargement dur.

3. Procédé selon la revendication 1 ou 2, ladite étape d'ajout du deuxième composant (32₁, 32₂) à la première partie (23) comprenant le placement de la première partie (33) du deuxième composant (32₁, 32₂) en contact avec la première partie (23) du premier composant (31).

4. Procédé selon l'une quelconque des revendications précédentes, ladite étape de formation de la deuxième partie (27) du premier composant (31) comprenant la formation d'un troisième composant au-dessus de la première partie (33) du deuxième composant (32₃), le troisième composant comprenant une structure en treillis ou un matériau semi-fondu.

5. Procédé selon l'une quelconque des revendications précédentes, ledit deuxième composant (32) étant fixé au premier composant (31) par le processus de formation de la deuxième partie (27) du premier composant.

6. Procédé selon l'une quelconque des revendications précédentes, ledit deuxième composant (32) étant encapsulé dans le premier composant (31) après formation de la deuxième partie (27) du premier composant (31).

7. Procédé selon l'une quelconque des revendications précédentes, ladite première partie (23) du premier composant (31) comprenant un évidement (25) ; et ledit ajout du deuxième composant (32) à la première partie (23) du premier composant (31) comprenant l'insertion d'au moins une partie du deuxième composant dans l'évidement.

8. Procédé selon l'une quelconque des revendications précédentes, ledit deuxième composant (32) étant plus dur que le premier composant (31).

9. Procédé selon l'une quelconque des revendications précédentes, ladite première et/ou ladite deuxième partie (23, 27) du premier composant (31) étant formée à partir d'au moins l'un d'un procédé de fusion/frittage par faisceau laser/électron, d'un processus de fusion sur lit de poudre, d'un processus d'impression 3D, d'un processus de frittage/fusion laser sélectif, d'un processus par soufflage de poudre, d'un processus de dépôt par laser direct, d'un processus de fabrication de forme libre, d'un processus de fabrication additive par couches, d'un processus d'alimentation en fil métallique et d'un processus de dépôt d'énergie directe.

10. Procédé selon l'une quelconque des revendications précédentes, ledit deuxième composant (32) étant formé par au moins l'un d'un processus de coulée, d'un processus de forgeage, d'un processus de laminage, d'un processus d'étirage, d'un processus d'usinage, d'un processus de pressage isostatique à chaud (HIP) et d'un processus de fabrication additive.

11. Procédé selon l'une quelconque des revendications précédentes, ladite première partie (23) du premier composant (31) étant formée sur une plaque de base (22) ; et
ledit procédé comprenant en outre le détachement de la première partie (23) du premier composant (31) de la plaque de base (22).

12. Procédé selon l'une quelconque des revendications précédentes, comprenant en outre l'usinage d'au moins une surface d'au moins l'un des premier et deuxième composants (31, 32).

13. Procédé selon l'une quelconque des revendications précédentes, une pluralité de deuxièmes composants (32) étant ajoutés à la première partie (23) du premier composant (31).

14. Procédé selon l'une quelconque des revendications précédentes, comprenant en outre :
l'ajout d'un deuxième composant supplémentaire (32) à la deuxième partie (27) du premier composant (31) ; et
la formation d'une troisième partie du premier composant à l'aide de la fabrication additive.
